# EUROPÄISCHE PATENTSCHRIFT

(11) **EP 0 832 790 B1**
(45) Veröffentlichungstag und Bekanntmachung des Hinweises auf die Patenterteilung: **06.10.2004**
(21) Anmeldenummer: 97114835.8
(22) Anmeldetag: 27.08.1997
(51) Int. Cl.: B60R 21/20

(54) **Einrichtung zum Befestigen eines Gassackmoduls**
Fastening device for an airbag module
Dispositif de fixation pour un module de sac gonflable

(30) Priorität: 27.09.1996 DE 29616891 U
(43) Veröffentlichungstag der Anmeldung: 01.04.1998
(73) Patentinhaber: TRW Automotive GmbH, 73553 Alfdorf (DE)
(72) Erfinder: Fischer, Anton, 73572 Heuchlingen (DE)
(74) Vertreter: Kitzhofer, Thomas, Dipl.-Ing.

(56) Entgegenhaltungen:
- EP-A- 0 488 618
- EP-A- 0 539 869

## Beschreibung

Die Erfindung betrifft eine Einrichtung zum Befestigen eines Gassackmoduls an einem Fahrzeugteil, insbesondere an einer Lenkradnabe., nach dem Oberbegriff des Anspruchs 1.
Eine solche Befestigungseinrichtung ist aus EP 0 488 618 A1 bekannt.

Die Erfindung schafft eine Einrichtung zum Befestigen eines Gassackmoduls an einem Fahrzeugteil, die eine schnelle, effiziente und sichere Montage ermöglicht. Die Einrichtung ist dadurch gekennzeichnet, daß die Stege, an denen sich der Schraubenkopf abstützt, an ihrem freien Ende auf der dem Schraubenkopt zugewandten Seite jeweils eine seitlich vorstehende Nase aufweisen, unter die der Schraubenkopf beim Eindrehen der Schraube wandert. Dadurch ergibt sich eine formschlüssige Verbindung des Fahrzeugteils mit dem Gassackmodul, das bei einer nicht vollständig angezogenen oder bei einer sich lockernden Schraube nach wie vor gehaltert ist. erfindungsgemäße Einrichtung dem Fahrzeughersteller bereits mit einer vormontierten Befestigungsschraube geliefert werden, der bei der Montage keine separaten Schrauben zuführen muß. Da die vormontierte Schraube seitlich vom Gassackmodul absteht und genügend Raum für Montagevorrichtungen zur Verfügung steht, kann die Vormontage maschinell erfolgen. Zur Montage des Gassackmoduls muß dieses nur auf das Fahrzeugteil so aufgesetzt werden, daß der Schraubenschaft zwischen die Stege des Halteteils geschoben wird, und anschließend wird die Schraube so weit eingedreht, bis sie sich mit dem Schraubenkopf am Halteteil abstützt und das Gehäuse des Gassackmoduls an das Halteteil preßt. Von den Fahrzeugherstellern den Zulieferern vorgeschriebene maximale Montagezeiten für die zugelieferten Gassackmodule können durch die erfindungsgemäße Einrichtung leichter eingehalten werden.

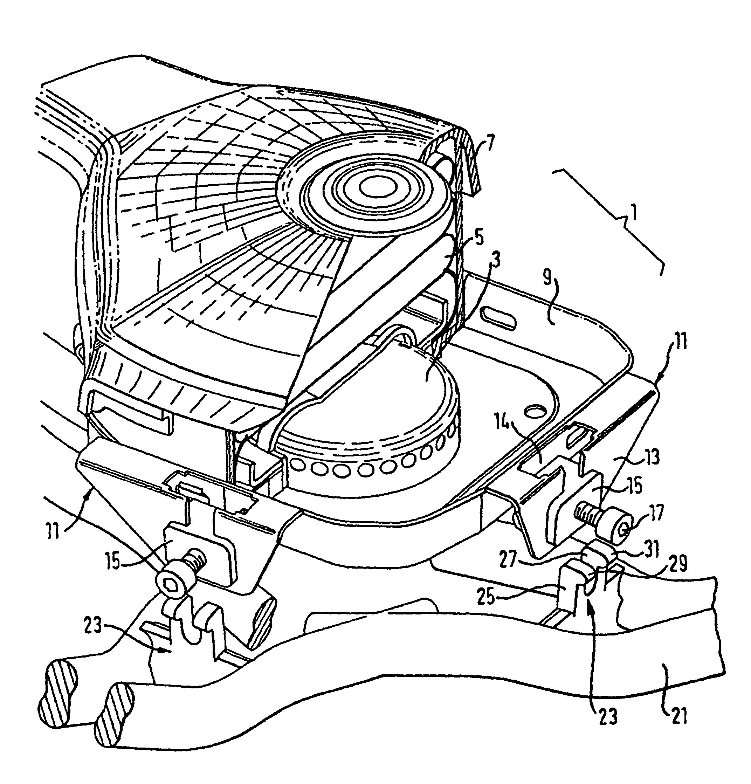

Weitere Merkmale und Vorteile der Erfindung ergeben sich aus der nachfolgenden Beschreibung einer bevorzugten Ausführungsform und aus der Zeichnung, auf die Bezug genommen wird. Die Zeichnung zeigt eine perspektivische Ansicht eines Gassackmoduls und einer Lenkradnabe, die durch eine erfindungsgemäße Einrichtung miteinander verbunden werden.

In der einzigen Figur ist ein Gassackmodul 1 dargestellt, das einen Gasgenerator 3 und einen Gassack 5 umfaßt, wobei das Modul 1 durch eine Abdeckung 7 umschlossen wird. Das Modul 1 umfaßt ferner ein wannenartiges Gehäuse 9 aus Blech. Vom Außenrand des Gehäuses 9 stehen mehrere Lappen 11, von denen nur zwei gezeigt sind, seitlich ab, wobei die Lappen 11 einstückig mit dem Gehäuse 9 verbunden sind. Die Enden 13 der Lappen sind nach unten abgewinkelt. Eine Ausnehmung 14 in jedem Lappen 11 erlaubt ein Einschieben einer mit seitlichen Nuten versehenen Mutter 15 in den Teil der Ausnehmung 14, der sich in den Bereich des Endes 13 erstreckt. Die Ränder jeder Ausnehmung 14 ragen in die Nuten der Muttern 15, die dadurch drehfest am Gehäuse 9 befestigt sind. In jede Mutter 15 ist von außen eine Schraube 17 mit einem selbstfurchenden Gewinde wenige Gewindegänge tief eingeschraubt.

Ein Lenkrad 21, von dem nur das Skelett gezeigt ist, weist im Bereich der Lenkradnabe mehrere an es angeformte Halteteile 23 auf. Die Halteteile 23 stehen nach oben annähernd rechtwinkelig zur Oberseite der Lenkradnabe vor und weisen jeweils ein freies Ende auf, das sich in zwei Stege 25, 27 aufspaltet. Der Zwischenraum zwischen den Stegen 25, 27 ist geringfügig breiter als der Durchmesser der Schrauben 17. Die Stege 25 und 27 weisen an ihrem freien Ende jeweils eine seitlich nach außen vorstehende Nase 29 bzw. 31 auf.

Zum Montieren des Gassackmoduls 1 wird dieses mit den vormontierten Schrauben 17 einfach von oben auf die Lenkradnabe gesetzt, wobei die Schraubenschäfte zwischen die Stege 25, 27 greifen. Beim anschließenden Anziehen der Schrauben 27 wandern die Schraubenköpfe unter die Nasen 29, 31, so daß sich eine formschlüssige Verbindung zwischen dem Gassackmodul 1 und dem Lenkrad 21 ergibt. Selbst wenn die Schrauben 17 nicht vollständig angezogen sind, d.h. daß die Muttern 15 nicht an die Hinterseite der Halteteile 23 gepreßt werden und sich die Schraubenköpfe nicht vorderseitig an den Halteteil 23 abstützen, ist ein Herausziehen des Gassackmoduls 1 nicht möglich.

Die seitlich abstehenden Lappen 11 bieten den Vorteil, daß sie sich geringfügig verbiegen können und so beim Anziehen der Schrauben 17 geringfügige Längentoleranzen zwischen den Lappen 11 einerseits und den Halteteilen 23 andererseits ausgleichen.

Da jede Schraube 17 bereits vormontiert ist, wird die Zeit zum Montieren des Gassackmoduls 1 reduziert. Zudem können Fehlverschraubungen bei der Montage des Gassackmoduls 1 durch nicht vollständig eingedrehte Schrauben vermieden werden, da aufgrund der guten Zugänglichkeit der Schrauben 17 das Vorsehen einer automatischen Lagekontrolleinrichtung für die Schrauben 17 nach dem Eindrehen möglich ist.

## Patentansprüche

1. Einrichtung zum Befestigen eines Gassackmoduls (1) an einem Fahrzeugteil, insbesondere an einer Lenkradnabe, wobei das Fahrzeugteil wenigstens ein abstehendes Halteteil (23) mit einem sich in zwei Stege (25, 27) aufspaltenden Ende und das Gehäuse (9) des Gassackmoduls (1) wenigstens eine seitlich in das Gehäuse oder ein mit diesem verbundenes Teil eingedrehte vormontierbare Schraube (17) aufweist, deren Schaft beim Aufsetzen des Gassackmoduls (1) auf das Fahrzeugteil zwischen die Stege (25, 27) greift und die sich beim anschließenden Anziehen mit ihrem Schraubenkopf am Halteteil (23) abstützt **dadurch gekennzeichnet, daß** die Stege (25, 27) an ihrem freien Ende auf der dem Schraubenkopf zugewandten Seite jeweils eine seitlich vorstehende Nase (29, 31) aufweisen, unter die der Schraubenkopf beim Eindrehen der Schraube (17) wandert und so das Gassackmodul (1) formschlüssig mit dem Fahrzeugteil verbindet.

2. Einrichtung nach Anspruch 1, **dadurch gekennzeichnet, daß** das Gehäuse (9) des Gassackmoduls (1) wenigstens einen seitlich abstehenden, abgewinkelten Lappen (11) aufweist, in dessen abgewinkeltem Ende (13) die vormontierte Schraube (17) eingedreht oder an ihm befestigt ist.

3. Einrichtung nach Anspruch 2, **dadurch gekennzeichnet, daß** am abgewinkelten Ende (13) des Lappens (11) eine nutenartige Ausnehmung (14) vorgesehen ist, in die eine Mutter (15) zur Aufnahme der Schraube (17) mit seitlichen Nuten eingeschoben werden kann.

4. Einrichtung nach einem der vorstehenden Ansprüche, **dadurch gekennzeichnet, daß** die Schraube (17) ein selbstschneidendes oder selbstfurchendes Gewinde aufweist.

5. Einrichtung nach einem der vorstehenden Ansprüche zur Befestigung des Gassackmoduls (1) an einer Lenkradnabe, **dadurch gekennzeichnet, daß** mehrere Halteteile (23) in etwa rechtwinkelig von der äußeren Oberfläche der Lenkradnabe abstehen und am Lenkradskelett angeformt sind.

## Claims

1. A means for securing a gas bag module (1) to a vehicle part, more particularly to a steering wheel hub, the vehicle part comprising at least one projecting mounting part (23) having an end split into two webs (25, 27), and the housing (9) of the gas bag module (1) comprising at least one bolt (17) adapted to be pre-mounted, which is screwed into one side of the housing or a part connected thereto, the shank of the bolt engaging between the webs (25, 27) when the gas bag module (1) is placed on the vehicle part, and the bolt being supported by its bolt head on the mounting part (23) in subsequent tightening, **characterised in that** each of the webs (25, 27) comprises at its free end on the side facing the bolt head a laterally protruding nose (29, 31) beneath which the bolt head moves when the bolt (17) is screwed in and thus connects the gas bag module (1) to the vehicle part with an interlocking fit.

2. The means as set forth in claim 1, **characterised in that** the housing (9) of the gas bag module (1) comprises at least one laterally projecting, angled tab (11), the pre-mounted bolt (17) being screwed in or secured to the angled end (13) of the tab.

3. The means as set forth in claim 2, **characterised in that** a groove-like recess (14) is provided in the angled end (13) of the tab (11), the recess being adapted to accommodate a nut (15) having lateral grooves and provided for receiving the bolt (17).

4. The means as set forth in any of the preceding claims, **characterised in that** the bolt (17) is a self-tapping or thread-forming bolt.

5. The means as set forth in any of the preceding claims for securing the gas bag module (1) to a steering wheel hub, **characterised in that** several mounting parts (23) protrude roughly at right angles from the outer surface of the steering wheel hub and are formed integrally with the steering wheel skeleton.

## Revendications

1. Système de fixation d'un module de coussin à gaz (1) sur une partie de véhicule, en particulier sur le moyen d'un volant de direction, la partie de véhicule présentant au moins une pièce de maintien (23) en saillie, avec une extrémité fendue pour se diviser en deux barrettes (25, 27), et le boîtier (9) du module de coussin à gaz (1) présentant au moins une vis (17) susceptible d'être montée au préalable, qui est vissée latéralement dans le boîtier ou dans une pièce reliée à celui-ci, vis dont la tige vient en prise entre les barrettes (25, 27) lors de la pose du module de coussin à gaz (1) sur la partie du véhicule et qui, lors du vissage (17) consécutif, prend appui par sa tête de vis sur la pièce de maintien (23), **caractérisé en ce que** les barrettes présentent à leur extrémité libre, du côté qui est tourné vers la tête de vis, un ergot (29, 31) faisant saillie latéralement et sous lequel se déplace la tête de la vis (17) lorsqu'on visse celle-ci et qui relie ainsi le module de coussin à gaz (1) par coopération de formes à la partie de véhicule.

2. Système selon la revendication 1, **caractérisé en ce que** le boîtier (9) du module de coussin à gaz (1) présente au moins une patte (11) coudée qui se dresse latéralement et dans l'extrémité (13) coudée de laquelle est vissée la vis (17) montée au préalable, ou est fixée sur cette extrémité.

3. Système selon la revendication 2, **caractérisé en ce qu'**à l'extrémité (13) coudée de la patte (11) est prévu un évidement (14) en forme de rainure dans lequel peut être introduit un écrou (15) ayant des rainures latérales et destiné à recevoir la vis (17).

4. Système selon l'une des revendications précédentes, **caractérisé en ce que** la vis (17) présente un filetage autotaraudeur ou un filetage autorainureur.

5. Système selon l'une des revendications précédentes pour fixer le module de coussin à gaz (1) sur un moyeu de volant de direction, **caractérisé en ce que** plusieurs pièces de maintien (23) se dressent approximativement en angle droit à partir de la surface extérieure du moyeu de volant de direction et sont formées sur le squelette du volant de direction.
